# EUROPEAN PATENT APPLICATION

(11) **EP 2 063 040 A2**
(43) Date of publication of application: **27.05.2009**
(21) Application number: 08105851.3
(22) Date of filing: 21.11.2008
(51) Int. Cl.: E04C 2/04, E04C 2/16, E04B 1/88, C04B 28/02, F16L 59/00, C04B 14/42, C04B 14/46, C04B 111/28, C04B 111/52

(54) **Incombustible insulation material**

(30) Priority: 23.11.2007 TR 200708128
(71) Applicant: Erdemir, Ahmet Bedii, Cadde Beysuikent Yani, Ankara (TR)
(72) Inventor: Erdemir, Ahmet Bedii, Cadde Beysuikent Yani, Ankara (TR)
(74) Representative: Dericioglu, Ekin

(57) **Abstract**

Invention is about an incombustible insulation material used for the purposes of heat and sound insulation, absorption of humidity and prevention and delay of spread of fires that may occur in dwellings, offices, schools, theatres, cinemas, concert halls, hospitals, in land, air and marine public transport vehicles, in all military and industrial applications, in rockets, jet engines and gas turbines.

## Description

### Technical Area

Invention is about an incombustible insulation material used for the purposes of heat and sound insulation, absorption of humidity and prevention and delay of spread of fires that may occur in dwellings, offices, schools, theatres, cinemas, concert halls, hospitals, in land, air and marine public transport vehicles, in all military and industrial applications, in rockets, jet engines and gas turbines.

### Prior Art

In the current technique, for the purpose of providing heat and sound insulation boards like plaster board and betopan that are made of mixtures of gypsum, cardboard, cellulosic fibers, cement and wood chips are being used. Plaster board is made of gypsum with two sides covered with a cardboard used for the purpose of making walls and ceilings. Plaster board is widely used in construction and decoration works due to its ability to be shaped and applied with ease and speed. Special type plaster boards; that are physically more resistant due to fibers added to gypsum, that are durable to humidity due to chemicals incorporated and resistant to fire due to improvements incorporated are being manufactured and used.

Betopan is a light, heat resistant material made of physical mixture of wood and cement. Shielded betopan is a composite material consisting in three layers. Its outer surfaces are covered with silisium of 2 mm thickness, and middle layer is of classical betopan structure. This composition increases the resistance of the said material under difficult conditions.

However, when the materials mentioned above such as plaster board and betopan are tested for the duration of resistance to flame, prevention of spread of fire and temperature of the flame they contact, it is seen that they cannot maintain their forms and disappear by releasing toxic gas under the influence of high temperatures and flame. The materials mentioned constitute a risk for human health due to the toxic gases they release to the environment. Additionally, these materials cannot provide sufficient heat and sound insulation.

There are other insulation materials in the form of foams made of polymeric materials such as polystyrene, polyurethane, polyethylene, etc. These types of materials not only support fire as fuel, but also they disappear by releasing toxic gas during fires. Additionally, they are not effective in sound insulation.

Glass wool is one of the materials used for insulation purposes, is made by spinning molten silisium sand into fibers at 1200 - 1250 oC. To suit different application sites and purposes, it can be manufactured in different dimensions, densities, and forms. It is used for heat and sound insulation and for acoustic arrangement purposes. These materials cannot resist flames and high temperatures during fire and disappear by melting.

Other materials, namely rock wool and ceramic blankets are also used for insulation purposes. Although glass wool, rock wool and ceramic blankets are resistant to high temperatures, polymeric or organic binders added to them to maintain their forms cannot resist fire temperatures. Only ceramic blankets do not bum and lose their form, but they transmit heat at a high rate. For the purpose of maintaining the blanket form ceramic fibers are interlaced at high density. This causes high conductivity

Consequently it became necessary that new manufacturing techniques that will yield new materials which do not posses the disadvantages of the current materials, hence endure flames at high temperatures and for long periods of time to be implemented.

### Brief Description of The Invention

Purpose of the invention is to realize an insulation material that can endure to high temperatures and to flames for prolonged periods.

Another purpose of the invention is to realize an incombustible insulation material that will not fuel the fire and endure high temperatures and flame.

Another purpose of the invention is; to realize an insulation material that either do not release any toxic gas or release only negligible quantities, when exposed to flame at high temperatures.

A different purpose of the invention is; to realize an insulation material that do not conduct heat, resist sound transmission and absorb humidity.

Another purpose of the invention is; to realize an insulation material that can absorb and retain water released automatically through slotted pipes in walls during a fire and hence help to stop fire from spreading by virtue of being wet.

### Detailed explanation of the Invention

The present invention is about an incombustible insulation material which resists to the conduction of heat and sound, absorbs humidity and that can be employed for prevention and delay of the fires that may occur in dwellings, offices, theatres, cinemas, concert halls, hospitals, in land, air, marine public transportation vehicles, in all military and industrial applications and in rockets, jet engines and gas turbines.

Invention developed in order to realize the mentioned purposes is an incombustible insulation material that is used to stop fires, to stop spread of fires, used for heat and sound insulation, used for the absorption of humidity. It contains at least one organic and/or inorganic binding material, at least one fiber and liquid that ensures formation of macro and micro structure.

Additionally the insulation material developed contains at least one net for the prevention of fragmentation and disintegration.

In a preferred application of the invention, raw material of the net preventing fragmentation and disintegration is selected from glass fiber, rock wool, silicon fiber, carbon fiber and metal fiber group and/or from the group of organic fibers.

Invention developed for the purposes explained; contains at least one surface active agent.

In a preferred application of the invention aforementioned organic and/or inorganic binding material is selected amongst gypsum, lime, cement and their derivatives.

In a preferred application of the invention aforementioned fiber is selected amongst natural organic, natural inorganic, synthetic organic, synthetic inorganic and regenerated organic fiber groups.

In a preferred application of the invention fiber used is selected from the groups listed below as a single variety or as a combination;
- Natural organic fibers; wool (protein) fibers and/or vegetable (cellulosic) fibers,
- Natural inorganic fibers; asbestos fiber, metal fiber, silicon fiber, glass fiber and rock wool,
- Organic synthetic fibers; polyester, polyamide, polyacrylonitrile, polyolefin and polyurethane fibers,
- Inorganic synthetic fibers carbon fibers,
- Regenerated organic fibers; viscose rayon (cellulosic), casein and TVP fibers.

In a preferred application of the invention; liquid material ensuring formation of aforementioned macro and micro structure is water.

In a preferred application of the invention; 100 and 200 cm³ of insulation material contains 5 to 300 g organic and/or inorganic binder, 2 to 100 g fiber, 5 to 1500 g liquid, 0.5 to 50 g surface active material and 0.5 to 50 g net preventing fragmentation and disintegration.

Manufacturing method of the insulation material developed for the realization of the aforementioned purposes contains following operational steps;
- Mixing in the temperature range of +2°C and +96°C minimum one fiber type in liquid material that ensures formation of macro and micro structure.
- During mixing operation at least one organic and/or inorganic binding material is fed,
- Transferring of the resulting slurry into a mould at equal thickness
- Excess water is discharged from the mould,
- Resting the slurry in the mould until it reaches to a thicker consistency,
- With or without the mould the consistent material is subjected to minimum 100 oC in oven for drying,
- Dried insulation boards are stacked.

In order to realize aforementioned purposes, surface active material is added to the aforementioned fiber and water mixture.

In order to realize aforementioned purposes, after pouring some of the slurry into the mould and distribution thereof in equal proportions, at least one net preventing fragmentation and disintegration is placed in the mould, then the rest of the slurry is poured and equalised.

In a preferred application of the invention; raw material of the aforementioned net preventing fragmentation and disintegration is selected amongst glass fiber, rock wool, silicon fiber, carbon fiber and metal fiber and/or organic fiber groups.

In a preferred application of the invention; aforementioned mixing operation is applied between 2 seconds and 400 minutes after addition of the binding material.

In a preferred application of the invention; after the aforementioned slurry is poured into the mould, it is rested until a thicker consistency is reached, when required vibration and/or vacuum may be applied.

In a preferred application of the invention; either one or both surfaces of the dried boards that come out of the oven can be treated with chemicals and/or painted and/or covered with organic and/or inorganic materials.

Aforementioned insulation material consists of organic and/or inorganic binder, single type or mixtures of natural and/or artificial fibers, a liquid for the formation of macro and micro structure, surface active material and a net preventing fragmentation and disintegration. In the table below listed are the components and respective quantities that are contained in the incombustible insulation material.

**Table 1. The Components and Respective Quantities Contained in the Incombustible Insulation Material.**

| **Component** | **Quantities Preferred in g / (150) cm³** | **Quantities Usable in g / (100-200) cm³** |
|---|---|---|
| Organic and/or Inorganic binder | 20 | 5-300 |
| Fiber | 10 | 2-100 |
| Liquid material ensuring formation of macro and micro structure | 300 | 150-1500 |
| Surface active material | 0,5 | 0,5-50 |
| Net preventing fragmentation and disintegration. | 0,5 | 0,5-50 |

The details of the manufacturing process of the aforementioned insulation material are described below.

### Preparation of the slurry

In the first step of manufacturing, fibers are mixed with the water as the liquid material ensuring formation of macro and micro structure and surface active material in a tank, and during mixing operation organic and/or inorganic binding materials are fed. Mixing operation is applied in the temperature range of +2°C and +96°C between 2 seconds and 400 minutes, after addition of the binder. During the slurry preparation, it is ensured that fibers are individually distributed within the slurry but damage to fiber length is avoided.

Gypsum, lime, cement and their derivatives can be used as organic and/or inorganic binding material. These materials render the product incombustible and at the same time serve as binder.

Aforementioned fibers are firstly covered with organic and/or inorganic binder and thus form the micro structure, then, they form the macro structure by entangling with each other. Formation of micro structure is based on the crystallization of binder on fiber surfaces after the completion of the necessary chemical process. Fibers become incombustible when covered with binder.

Aforementioned fibers can be classified into five main groups as natural, synthetic, organic, inorganic and regenerated.

These are; natural fibers like wool (protein) fibers and vegetable (cellulosic) fibers, natural inorganic fibers such as asbestos, metal, silicon, glass and rock wool, organic synthetic fibers such as polyester, polyamide, polyacrylonitrile, polyolefin, and polyurethane, inorganic synthetic fibers such as carbon fiber, regenerated organic fibers such as viscose rayon (cellulosic), casein, TVP.

Water serves as; carrier, reaction initiator, micro and macro structure formation agent during seeping and drying.

Surface active material prevents development of microorganisms during manufacturing, ensures rapid wetting, removes oil and other pollutants that can be present in the medium and removes from the water phase by emulsifying them.

### Board forming and discharge of excess water

The mixture in the form of a slurry is partly poured into the mould. Upon its even distribution in the mould the net that prevents fragmentation and disintegration is placed in the middle or near one of the surfaces of the formed product. The remainder of the slurry is poured in and evenly distributed. Excess water is allowed to run off from the bottom of the mould under gravity. At times removal of excess water is assisted by a vacuum, or vacuum is applied later for removal of as much water as possible The purpose of this operation is to minimise the duration of drying and to economise on the energy consumed during drying.

When it is necessary after the moulding slurry is either subjected to vacuum or to vibration until a consistent structure is achieved. The conditions under which excess water is removed; namely the speed of removal and vacuum strength affects the macro structure, expressed in a different way these parameters determine the degree of fiber entanglement. In turn the macro structure determines the insulation properties of the insulator thus produced. In certain cases from the beginning of excess water removal stage instead of vacuum application or before the vacuum application various vibrations may be applied. Vibration is effective on the macro structure and evenness of the product.

The aforementioned net that prevents fragmentation and disintegration is made of glass fiber or rock wool or silicone fibers or carbon fibers or metal fibers or selected from the groups of organic fibers. This net prevents fragmentation and disintegration of the final product which is not very strong. By virtue of the net even if the insulation board is broken its fragments stay together and the board can still be used with ease.

### Drying

Product is dried in an oven after its placed in mobile casettes either while it is still in the mould or after being taken out of the mould. Drying takes place in the oven at or above 100 oC. The flow of hot air and product are countercurrent. The dried product is stacked and packed either directly or after being coated.

### Features that can be imparted to the product

As required the boards may be coated on one or both surfaces for the improvement of its humidity absorption or to render it hydrophobic. Coating may be made by chemicals, by paints, by polymers, or metals, wood, or any other organic or inorganic substance can be glued on. For coating glues or binders such as gypsum, cement and their derivatives, ceramic glues and/or organic and inorganic glues can be used. The final properties of the product are determined by the choice of starting materials and the coatings implemented after drying. The insulation material mentioned can be manufactured in board, brick or in loose bulk form.

The insulation material mentioned in dry form has the ability of preventing or delaying spread of fire. As well as this feature its ability to absorb and distribute water in itself very fast can be used as part of active fire fighting system by automatic release of water through slotted pipes in walls covered by this material upon fire detection. Rapidly absorbed water takes away the fire energy assisting fire fighting.

Protection scope of this application is defined in demands section, and by no means is limited to what has been explained and exemplified so far. It is obvious that a specialist can utilize the innovation principle in other similar applications or use the innovation in other areas. Therefore it is also obvious that such applications would be far from exceeding the principles of the present innovation. The terminology and words used for descriptive purposes, in no way they constitute limitations.

## Claims

1. An insulation material used in prevention and delay of spread of fire, in heat and sound insulation and in absorption of humidity; comprising
- at least one net for preventing fragmentation and disintegration,
- at least one surface active agent,
- at least one organic and/or inorganic binding material,
- at least one fiber of various types,
- at least one liquid material that ensures formation of macro and micro structure **and** the steps of
- mixing of the fiber and the liquid material that ensures formation of micro and macro structure,
- feeding of an organic and/or inorganic binding material during mixing,
- transferring the slurry into the mould and distributing it equally,
- discharging of the excess water from the mould,
- resting the slurry in the mould until it is drained,
- the resulting material being dried in the drying oven at minimum 100°C either with or without the mould,
- dried insulation material taken out of the drying oven being stacked and packed;
**characterized in that** 5 to 300 g of inorganic and/or organic binder, 2 to 100 g of fiber, 5 to 1500 g of liquid material, 0.5 to 50 g of surface active agent, and 0.5 to 50 g of net that prevents fragmentation and disintegration are used to produce 100 to 200 cm³of the said insulation material.

2. An insulation material according to Claim 1, **characterized in that** the raw material of the net preventing fragmentation and disintegration is selected amongst glass fiber, rock wool, silicon fiber, carbon fiber and metal fiber and/or organic fiber groups.

3. An insulation material according to Claim 1 to 2, **characterized in that** the organic and/or inorganic binder is selected amongst gypsum, lime, cement, and their derivatives.

4. An insulation material according to Claim 1 to 3, **characterized in that** the liquid material used for the formation of macro and micro structure is water.

5. An insulation material according to Claim 1 to 4, **characterized in that** the fiber is selected from one of the groups below
- wool (protein) fibers and/or vegetable (cellulosic) fibers among the natural organic fibers
- asbestos fiber, metal fiber, silicon fiber, glass fiber and rock wool among the natural inorganic fibers
- fibers made of polyester, polyamide, polyacrylonitrile, polyolefin, polyurethane among the organic synthetic fibers
- carbon fiber among the inorganic synthetic fibers.
- viscose rayon (cellulosic) fiber, casein fiber, TVP (texturized vegetable protein) fibers among the regenerated organic fibers.

6. An insulation material according to Claim 1 to 5, **characterized by** the addition of surface active agent to the mixture of fiber and water.

7. An insulation material according to Claim 1 to 6, **characterized in that** after pouring some of the slurry into the mould and distribution thereof in equal proportions, at least one net preventing fragmentation and disintegration is placed in the mould, and the rest of the slurry is poured on top of it and equally distributed.

8. An insulation material according to Claim 1 to 7, **characterized in that** mixing operation is applied for a period of 2 seconds to 400 minutes following addition of the binding material.

9. An insulation material according to Claim 1 to 8, **characterized in that** after the slurry is poured into the mould, vibration and/or vacuum is applied and it is rested until a thicker consistency is reached.

10. An insulation material according to Claim 1 to 9, **characterized in that** one or either of the faces of the dried boards taken out of the drying oven are treated with chemicals and/or painted and/or coated with organic and/or inorganic materials.

11. An insulation material according to Claim 1 to 10, **characterized in that** the fiber and the liquid material that ensures formation of micro and macro structure are mixed in the temperature range of +2°C and +96°C.
